# EUROPEAN PATENT SPECIFICATION

(11) **EP 0 420 446 B1**
(45) Date of publication and mention of the grant of the patent: **24.03.1993**
(21) Application number: 90309922.4
(22) Date of filing: 11.09.1990
(51) Int. Cl.: B62D 11/08, B62D 11/10

(54) **Steering control system for a tracked vehicle**
Lenkbetätigungssystem für ein Kettenfahrzeug
Système de contrôle de direction pour un véhicule à chenilles

(30) Priority: 23.09.1989 GB 8921536
(43) Date of publication of application: 03.04.1991
(73) Proprietor: Self-Changing Gears Limited, Coventry Warwickshire (GB)
(72) Inventor: Webster, Donald James, Rugby, CV22 7RE (GB); Turley, Norman Arthur, Coventry, CV2 1NP (GB)
(74) Representative: Russell, Paul Sidney

(56) References cited:
- DE-B- 2 537 229
- GB-A- 1 156 451
- GB-A- 2 036 671

## Description

This invention relates to a steering control system for a tracked vehicle in which a brake can be applied hydraulically at one or the other of two transmission outputs on opposite sides of the vehicle to steer the vehicle, the control system comprising steering means whereby a driver can initiate application of the brakes, and can signal the tightness of a turn required, and pressure modulating means which is responsive to operation of the steering means to control the level of hydraulic pressure applied according to the tightness of the turn called for.

The invention may in particular be applied to the steer control of a tracked vehicle having a change speed gearbox incorporating a three differential steer mechanism such as the Merritt-Wilson transmission, widely used on military tracked vehicles.

Steering of the vehicle is achieved by establishing a track speed difference, commonly through the selected application of caliper brakes to discs attached to outputs of the steer differential at opposite sides of the gearbox. The caliper brakes are operated by hydraulic pressure, line pressure being modulated by the amount of steer demanded by the driver.

This modulation of pressure is critical to the effective operation of the brakes. It is found that in some installations of the three differential steer system there is an accelerated rate of wear in the brake friction pads when steering with lower speed ratios of the gearbox operating. It is the purpose of this invention to provide an improved control system that may be utilised to reduce the problem of brake pad wear.

The invention is characterised in that the system comprises by-pass means which enables the pressure modulating means to be by-passed when required for unmodulated line pressure to be applied directly upon operation of the steering means.

In a preferred arrangement the by-pass means becomes activated to respond to operation of the steering means, by-passing the pressure modulating means, automatically upon. selection of low range gearing of a change speed gearbox of the vehicle drive line. In a convenient arrangement, selection of the low range gearing causes switching in an electrical circuit which renders the by-pass means operational in response to the steering. means, the by-pass means becoming disabled again upon deselection of the low range gearing.

The by-pass means can comprise a selection valve which is adjustable between a first condition in which modulated line pressure is applied in response to operation of the steering means and a second condition in which unmodulated line pressure is applied. The valve may be a solenoid-operated slide valve comprising two inlet ports, for the modulated and unmodulated hydraulic supplies respectively, and a single outlet port leading to the brake. For operation of the valve the by-pass means can comprise an electrical circuit comprising a first (activating) switch and a second (operating) switch which becomes closed upon operation of the steering means, closure of the operating switch causing adjustment of the valve from its first condition to its second condition only when the activating switch is already closed. The steering means would conveniently comprise a steering handwheel, with a steering shaft extending from the wheel. The shaft can bear a first cam arrangement for operation of the pressure modulating means and a second cam arrangement for operation of the operating switch of the by-pass means.

There now follows a detailed description, to be read with reference to the accompanying drawings, of a steering control system which illustrates the invention by way of example.

In the accompanying drawings:
Figure 1 illustrates a three differential steer system for a tracked vehicle;
Figure 2 is a diagrammatic illustration of the arrangement of a known steering control system for such a vehicle;
Figure 3 is an illustration similar to Figure 2 but of a control system in accordance with the present invention;
Figure 4 is an axial section through a selection valve of by-pass means of the system shown in Figure 3; and
Figure 5 is a graph illustrating performance of the system of Figure 3.

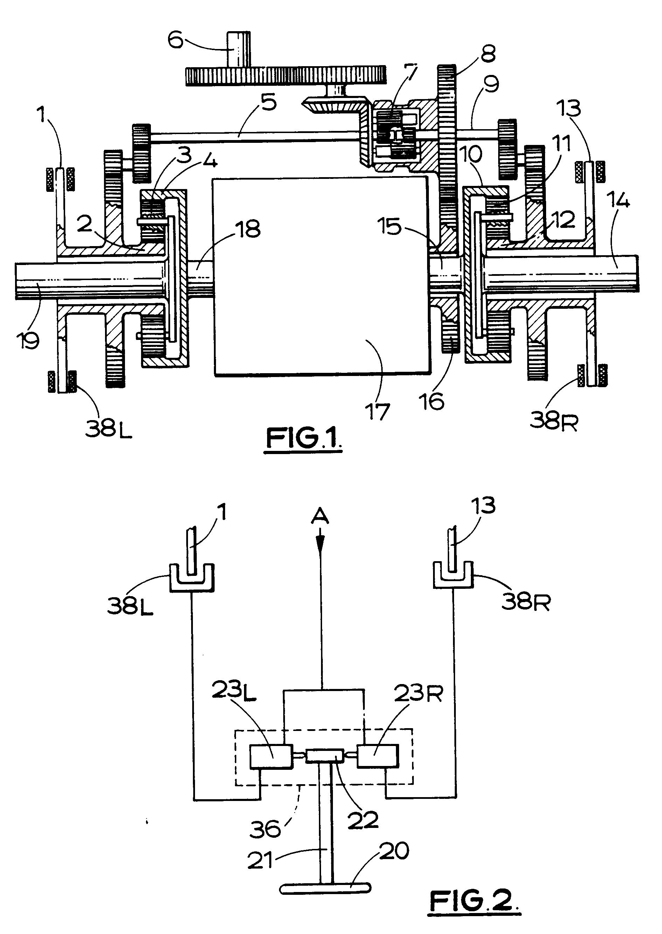

Referring to Figure 1, in a typical Merritt-Wilson transmission power from the vehicle power unit is transmitted via an input shaft 6 and through spur and bevel gearing to a steer differential gear 7. At this point power is divided in three directions, through steer shafts 5 and 9 and through gear 8. Gear 8 drives gear 16, this latter gear being on an input shaft of change speed gearing 17. There are two outputs from the change speed gearing, at 15 and 18, rotating at a common speed to drive annuli 4 and 10 of summing epicyclic gears 3 and 11. Sun wheels 2 and 12 of these epicyclic units are driven from the steer shafts 5 and 9 by spur gear reduction trains. Brake discs 1 and 13 are attached to the same shafts as the sun wheels. Output shafts 14 and 19 are attached to the planet carriers of these epicylic gears and the rotational speeds of the shafts is a summation of the sun and annulus speeds. Application of a braking force by brake caliper 38 to either of the discs 1 or 13 will cause the speed of the output shafts 14 and 19 to change. Because of the differential gear 7, as one disc and its associated sun wheel slows down the other disc and its sun wheel increases speed, so creating a speed differential between the outputs 14 and 19 on opposite sides of the vehicle and resulting in a steer turn of the vehicle.

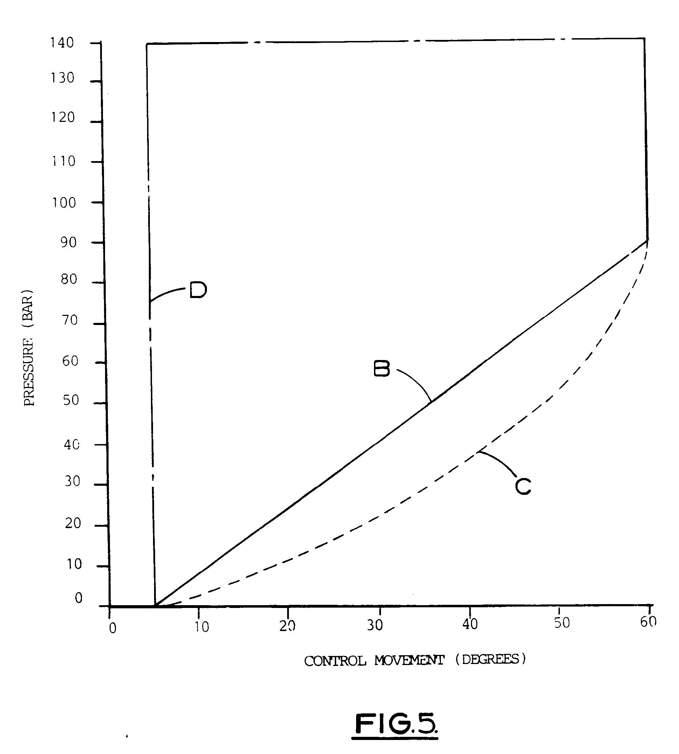

Figure 2 shows a previously known steer control system. Steering means comprises a driver-operated steering handwheel 20 mounted upon a shaft 21, the other end of the shaft having attached to it a cam plate 22. This part of the shaft is mounted within a controller unit 36 and the cam plate 22 contacts operating spindles of two pressure modulating valves 23L and 23R. There is one valve for each brake caliper; for a right turn the cam plate 22 will operate on the spindle of valve 23R in response to a right hand rotation of the handwheel 20, and similarly for a left hand turn the valve 23L is operated. Thus the line pressure from the vehicle hydraulic system entering the controller unit 36 at A is modulated according to the degree of turn applied to the handwheel 20 and typical examples of pressure/control movement are shown by figure 5 at B and C. Whilst the characteristics of these curves (B and C) have proved to be adequate in many applications, it has been shown in some cases that accelerated rate of wear occurs in the brake friction pads.

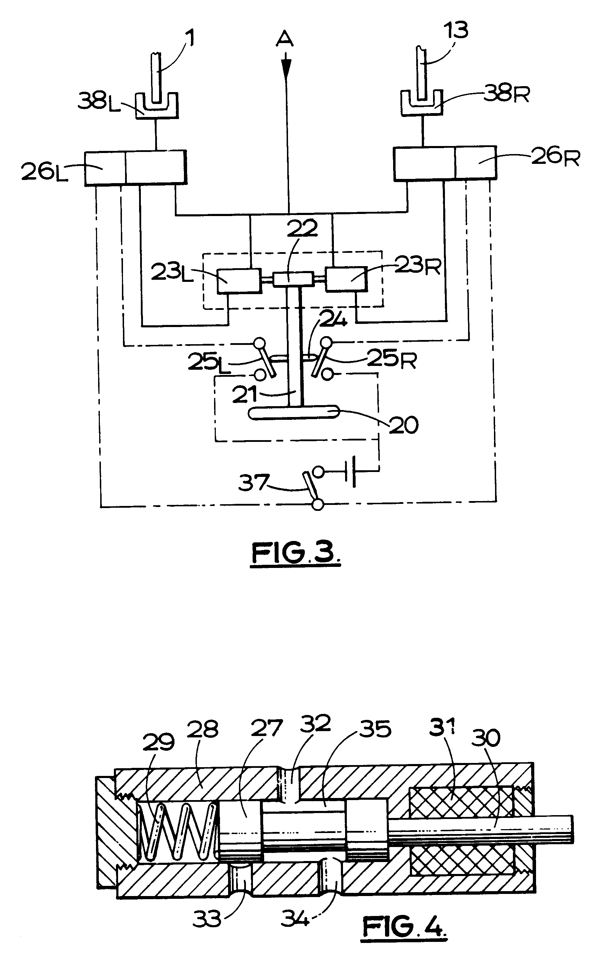

Figure 3 shows a control system according to the present invention which comprises selectively activatable by-pass means enabling the pressure modulating valves 23 to be by-passed, for unmodulated line pressure to be applied directly upon operation of the steering means. An additional cam plate 24 is fixed to the steer shaft 21, the second cam plate being arranged to depress plungers of by-pass operating switches in the form of micro-switches 25L and 25R. One terminal of each switch is connected to an electric energy source and the other terminal in each switch is connected to a solenoid-operated selection valve 26L or 26R.

A preferred design for the selection valves 26L and 26R is shown by Figure 4, but alternative designs may be used. The valve is a solenoid-operated slide valve comprising an axially slidable plunger 27 movable within a valve body 28. The plunger is forced to the limit of a valve bore by a spring 29 and remains in this position when there is no current energising a solenoid 31. The plunger 27 is in direct contact with a central rod 30 of the solenoid and is moved axially against the spring pressure upon actuation of the solenoid. Three ports 32, 33 and 34 in the valve body 28 are arranged to co-operate with a circumferential groove 35 in the plunger 27 in the following manner:-
a) In higher ratios of the vehicle gearbox no current passes to the solenoid 31 and the plunger 27 remains in the position shown by Figure 4. In this condition of the valve pressurised fluid passes from the steer controller 36 via the port 34 to the selected steer brake via port 32. This means that the controller functions to modulate line pressure (from A).
b) Upon selection of low range gearing (which may be any preselected number of ratios, as required) power is directed to the micro-switches 25L or 25R by a gearbox selector control switch 37; the switch 37 forms an activating switch of the by-pass means which renders it operational when closed and disables it when opened upon deselection of the low range gearing. As a vehicle turn is initiated by the handwheel 20 the cam plate 24 causes the micro-switch (25L or 25R according to the direction of turn) to make contact and complete the electrical circuit to the appropriate solenoid.

Energising the solenoid causes the rod 30 to move the plunger 27 so that the port 33 becomes opened to line pressure from A and port 34 becomes closed. This action results in hydraulic line pressure reaching the brake caliper 38 immediately a turn is initiated, by-passing the modulation of pressure normally given by the steer control unit 36. The effect is shown by curve D in Figure 5 in comparison with the modulated control shown by curves B and C.

The improved system can reduce steer brake wear because the slip period is reduced by the application of high pressure at an early stage of brake application. This is feasible for lower speed ratios where lower vehicle speeds and small radius turns prevail. In higher ratios pressure modulation remains to provide a suitable brake application for the higher speed conditions.

## Claims

1. A steering control system for a tracked vehicle in which a brake (38) can be applied hydraulically at one or the other of two transmission outputs (1, 13) on opposite sides of the vehicle to steer the vehicle, the control system comprising steering means (20, 21) whereby a driver can initiate application of the brakes, and can signal the tightness of a turn required, and pressure modulating means (23) which is responsive to operation of the steering means to control the level of hydraulic pressure applied according to the tightness of the turn called for, characterised in that the system comprises by-pass means (24, 25, 26, 37) which enables the pressure modulating means (23) to be by-passed when required for unmodulated line pressure to be applied directly upon operation of the steering means.

2. A steering control system according to claim 1 in which the by-pass means becomes activated to respond to operation of the steering means, by-passing the pressure modulating means, upon selection of low range gearing of a change speed gear box of the vehicle drive line.

3. A steering control system according to claim 2 in which selection of the low range gearing causes switching in an electrical circuit which renders the by-pass means operational in response to the steering means, the by-pass means becoming disabled upon deselection of the low range gearing.

4. A steering control system according to any one of the preceding means in which the by-pass means comprises a selection valve (26) which is adjustable between a first condition in which modulated line pressure from the pressure modulating means is applied in response to operation of the steering means and a second condition in which unmodulated line pressure is applied.

5. A steering control system according to claim 4 in which the selection valve (26) is a solenoid-operated slide valve.

6. A steering control system according to claim 5 in which the by-pass means comprises an electrical circuit for operation of the selection valve (26), the circuit comprising a first switch (37) and a second switch (25) which becomes closed upon operation of the steering means (20, 21), closure of the second switch (25) causing adjustment of the valve (26)from its first condition to its second condition only when the first switch (37) is already closed.

7. A steering control system according to claim 6 in which the steering means comprises a steering handwheel (20), a steering shaft (21) extending from the handwheel bearing a first cam arrangement (22) for operation of the pressure modulating means (23) and a second cam arrangement (24) for operation of said second switch (25).

8. A steering control system according to any one of the preceding claims for a tracked vehicle having a three differential steer system.

## Patentansprüche

1. Lenksystem für ein Kettenfahrzeug, bei welchem eine Bremse (38) an dem einen oder dem anderen von zwei Kraftübertragungsausgängen (1, 13) an einander gegenüberliegenden Seiten des Fahrzeuges hydraulisch betätigt werden kann, um das Fahrzeug zu lenken, wobei das Lenksystem eine Lenkvorrichtung (20, 21), aufweist, durch welche ein Fahrer die Bremsbetätigung einleiten und die Enge einer erforderlichen Wendung oder Richtungsänderung signalisieren kann, sowie eine Druck-Modulationsvorrichtung (23), welche auf die Betätigung des Lenksystems anspricht, um das Niveau des hydraulischen Druckes, welcher entsprechend der Enge der erforderlichen Wendung oder Richtungsänderung angewendet worden ist, zu steuern, **dadurch gekennzeichnet,** daß das System eine Umgehungsvorrichtung (24, 25, 26, 37) aufweist, welche es ermöglicht, daß die Druckmodulationsvorrichtung (23) umgangen wird, falls es erforderlich ist, daß nach der Betätigung der Lenkvorrichtung ein unmodulierter Leitungsdruck unmittelbar aufgebracht wird.

2. Lenksystem nach Anspruch 1, bei welchem die Umgehungs-Vorrichtung in Betrieb gesetzt wird, um auf die Betätigung der Lenkvorrichtung anzusprechen, wobei die Druckmodulationsvorrichtung nach Auswahl eines im unteren Bereich liegenden Antriebs eines Geschwindigkeitswechselgetriebes der Fahrzeug-Antriebsleitung umgangen wird.

3. Lenksystem nach Anspruch 2, bei welchem die Auswahl des im unteren Bereich liegenden Antriebes das Einschalten eines elektrischen Schaltkreises verursacht, welcher die Umgehungs-Vorrichtung in Abhängigkeit von der Lenkvorrichtung betriebsfähig macht, wobei die Umgehungs-Vorrichtung nach dem Inaktivieren des im unteren Bereich liegenden Antriebs unwirksam gemacht wird.

4. Lenksystem nach einem der vorhergehenden Ansprüche, bei welchem die Umgehungs-Vorrichtung ein Umschaltventil (26) aufweist, welches zwischen einem ersten Zustand, in welchem der modulierte Leitungsdruck von der Druckmodulationsvorrichtung ansprechend auf die- Betätigung der Lenkvorrichtung aufgebracht wird, und einem zweiten Zustand einstellbar ist, in welchem ein nicht modulierter Leitungsdruck aufgebracht wird.

5. Lenksystem nach Anspruch 4, bei welchem das Umschalt-Ventil (26) ein magnetbetätigtes Schieberventil ist.

6. Lenksystem nach Anspruch 5, bei welchem die Umgehungs-Vorrichtung einen elektrischen Schaltkreis für die Betätigung des Umschalt-Ventils (26) aufweist, wobei dieser Schaltkreis einen ersten Schalter (37) sowie einen zweiten Schalter (25) aufweist, welcher nach Betätigung der Lenkvorrichtung (20, 21) geschlossen wird, wobei das Schließen des zweiten Schalters (25) ein Verstellen des Ventils (26) von seinem ersten Zustand in seinen zweiten Zustand nur dann verursacht, wenn der erste Schalter (37) bereits geschlossen ist.

7. Lenksystem nach Anspruch 6, bei welchem die Lenkvorrichtung ein Lenk-Handrad (20) sowie eine sich von dem Handrad aus erstreckende Lenk-Spindel (21) aufweist, welche eine erste Mitnehmer-Anordnung (22) für eine Betätigung der Druckmodulationsvorrichtung (23) sowie eine zweite Mitnehmer-Anordnung (24) für eine Betätigung des zweiten Schalters (25) trägt.

8. Lenksystem nach einem der vorhergehenden Ansprüche für ein Kettenfahrzeug mit einem Dreifach-Differential-Lenksystem.

## Revendications

1. Système de commande de direction pour un véhicule à chenilles, dans lequel un frein (38) peut être serré hydrauliquement au niveau de l'une ou de l'autre de deux sorties (1,13) de la transmission, sur des côtés opposés du véhicule, pour orienter ce dernier, le système de commande comprenant des moyens de braquage (20,21), ce qui permet à un conducteur de déclencher le serrage des freins et signaler un degré important de braquage requis, et des moyens de modulation de pression (23), qui répondent à l'actionnement des moyens de braquage pour commander l'intensité de la pression hydraulique appliquée en fonction du degré de braquage requis, caractérisé en ce que le système comprend des moyens formant by-pass (24,25,26,37), qui permettent de contourner les moyens de modulation de pression (23) lorsque cela est requis pour l'application d'une pression de canalisation non modulée devant être apliquée directement lors de l'actionnement des moyens de braquage.

2. Système de commande de direction selon la revendication 1, dans lequel les moyens formant by-pass sont activés en réponse à l'actionnement des moyens de braquage, en permettant de contourner les moyens de modulation de pression, lors de la sélection d'un rapport de gamme inférieure d'une boîte de vitesses de la transmission du véhicule.

3. Système de commande de direction selon la revendication 2, dans lequel la sélection du rapport de gamme inférieure provoque, dans un circuit électrique, une commutation qui active les moyens formant by-pass en réponse aux moyens de braquage, les moyens formant by-pass étant désactivés lors de la suppression de la sélection du rapport de gamme inférieure.

4. Système de commande de direction selon l'une quelconque des revendications précédentes, dans lequel les moyens formant by-pass comprennent une vanne de sélection (26), qui est réglable entre un premier état, dans lequel la pression modulée de canalisation, qui est délivrée par les moyens de modulation de pression, est appliquée en réponse à l'actionnement des moyens de braquage, et un second état, dans lequel la pression non modulée de canalisation est appliquée.

5. Système de commande de direction selon la revendication 4, dans lequel la vanne de sélection (26) est une électrovanne à tiroir.

6. Système de commande de direction selon la revendication 5, dans lequel les moyens formant by-pass comprennent un circuit électrique servant à actionner la vanne de sélection (26), le circuit comprenant un premier interrupteur (37) et un second interrupteur (25), qui est fermé lors de l'actionnement des moyens de braquage (20,21), la fermeture du second interrupteur (25) provoquant la commutation de la vanne (26) de son premier état dans son second état, uniquement lorsque le premier interrupteur (37) est déjà fermé.

7. Système de commande de direction selon la revendication 6, dans lequel les moyens de braquage comprennent un volant (20), une colonne de direction (21) qui s'étend à partir du volant et porte un premier dispositif à came (22) servant à actionner les moyens de modulation de pression (23) et un second dispositif à came (24) servant à actionner ledit second interrupteur (25).

8. Système de commande de direction selon l'une quelconque des revendications précédentes pour un véhicule à chenilles possédant un système de direction à trois différentiels.
